# FASCICULE DE BREVET EUROPEEN

(11) **EP 2 126 420 B1**
(45) Date de publication et mention de la délivrance du brevet: **27.06.2012**
(21) Numéro de dépôt: 08761960.7
(22) Date de dépôt: 22.01.2008
(51) Int. Cl.: B60K 17/10, F16H 61/4052, F16H 61/4157, F16H 61/444, B60K 17/356

(54) **DISPOSITIF DE TRANSMISSION HYDROSTATIQUE D'UN ENGIN**
HYDROSTATISCHE GETRIEBEVORRICHTUNG FÜR EIN SCHWERLASTFAHRZEUG
HYDROSTATIC TRANSMISSION DEVICE FOR A HEAVY VEHICLE

(30) Priorité: 22.01.2007 FR 0752800
(43) Date de publication de la demande: 02.12.2009
(73) Titulaire: Poclain Hydraulics Industrie, 60411 Verberie (FR)
(72) Inventeur: HEREN, Jean, F-60280 Margny Les Compiègne (FR); LUCIENNE, Philippe, F-60300 Aumont en Halatte (FR); PRIGENT, André, F-60410 Saintines (FR); D'HERSIGNERIE, Cyrille, F-60680 Canly (FR)
(74) Mandataire: Intès, Didier Gérard André
(86) Numéro de dépôt international: PCT/FR2008/050093
(87) Numéro de publication internationale: WO 2008/107603

(56) Documents cités:
- EP-A- 1 004 469
- EP-A1- 1 026 024
- FR-A- 2 885 982
- US-A- 5 199 525

## Description

La présente invention concerne un dispositif de transmission hydrostatique d'un engin mobile ayant au moins deux organes de déplacement disposés l'un à la suite de l'autre dans le sens de déplacement dudit engin, le dispositif comprenant au moins deux moteurs hydrauliques, aptes à entraîner respectivement lesdits organes de déplacement et ayant chacun deux orifices principaux qui servent respectivement à l'alimentation et à l'échappement dans un sens préférentiel de circulation de l'engin, une pompe hydraulique principale reliée à deux conduites principales qui servent respectivement à l'alimentation et à l'échappement dans le sens préférentiel, et une valve de bipasse apte à adopter une position de vitesse réduite dans laquelle les orifices principaux d'alimentation des moteurs sont reliés à la conduite principale d'alimentation, tandis que les orifices principaux d'échappement sont reliés à la conduite principale d'échappement et une position de vitesse augmentée dans laquelle au moins un moteur est bipassé, l'orifice principal d'alimentation dudit moteur étant relié à la conduite principale d'échappement par une liaison de bipasse, tandis que les autres orifices principaux conservent leurs liaisons respectives.

Dans ce type de transmission, les moteurs hydrauliques sont raccordés en parallèle à la pompe hydraulique principale. Pour faire fonctionner l'engin à vitesse réduite, par exemple en situation de travail, ce montage en parallèle permet, comme on le sait, de répartir le fluide entre les moteurs en fonction de leurs besoins respectifs.

Pour faire fonctionner l'engin à une vitesse augmentée, par exemple lors d'un déplacement sur route, au moins l'un des moteurs est bipassé par la liaison de bipasse, puisque son orifice principal d'alimentation est relié à la conduite principale d'échappement, comme l'orifice principal d'échappement de ce moteur.

Il convient de relever que l'invention s'applique aux dispositifs dont tous les moteurs sont à cylindrée unique, comme à ceux dont au moins un moteur a plusieurs cylindrées qui peuvent être sélectionnées par un sélecteur spécifique au moteur considéré. Dans ce cas, il existe au moins une situation de vitesse supplémentaire aux situations de vitesse réduite et de vitesse augmentée décrites ci-dessus. Par exemple, un moteur qui n'est pas bipassé dans la position de vitesse augmentée de la valve de bipasse peut avoir deux cylindrées. Il existe donc, alors que la valve de bipasse est dans sa position de vitesse augmentée, une situation dans laquelle la cylindrée totale du moteur non bipassé est active, ce qui correspond à une situation de vitesse moyenne, et une autre situation dans laquelle une cylindrée réduite du moteur non bipassé est active, ce qui correspond à une situation de grande vitesse.

Par ailleurs, l'invention s'applique à des dispositifs ayant au moins deux moteurs, pour respectivement alimenter des organes de déplacement avant et arrière d'un engin. Il peut s'agir d'un engin à deux roues, à deux billes ou à deux groupes de roues, entraînés chacun par un seul moteur, ou bien, par exemple, d'un engin à trois ou quatre roues entraînées, chacune, par un moteur respectif.

On sait que le freinage d'un tel engin peut, au moins en partie, s'effectuer de manière hydrostatique, par une montée en pression dans la conduite principale qui sert à l'échappement.

L'effet du freinage hydrostatique est limité au moteur ou au groupe de moteurs dont les orifices principaux sont mis à des pressions différentes, en étant respectivement reliés aux conduites principales d'alimentation et d'échappement.

Lors du freinage hydrostatique, la pression augmente à l'orifice principal qui est relié à l'échappement. Toutefois, lorsque la valve de bipasse est dans sa position de vitesse augmentée, les deux orifices principaux du moteur qui est bipassé sont reliés à la conduite principale d'échappement, de sorte que le freinage hydrostatique est sans effet sur ce moteur.

Ainsi, pour son ralentissement, l'engin ne bénéficie que du couple de freinage offert par le ou les moteurs non bipassés. En conséquence, l'efficacité du freinage hydrostatique est limitée.

Le document FR 2 885 982 divulgue un dispositif de transmission hydrostatique selon le préambule de la revendication 1, ayant un sélecteur de cylindrée qui peut occuper une position intermédiaire dans laquelle tous les moteurs sont bipassés et la liaison entre les conduites principales est restreinte.

L'invention a pour but de remédier aux inconvénients précités en proposant un dispositif de transmission hydrostatique qui permette un meilleur freinage hydrostatique, même dans la position de vitesse augmentée.

Ce but est atteint grâce au fait que le dispositif de l'invention comporte des moyens de restriction aptes à être activés pour restreindre la circulation de fluide dans ladite liaison de bipasse alors que la valve de bipasse est dans sa position de vitesse augmentée.

Ainsi, lors d'un freinage hydrostatique réalisé alors que la valve de bipasse est dans sa position de vitesse augmentée, même le ou les moteurs bipassés participent au freinage hydrostatique puisque la restriction de la circulation de fluide dans la liaison de bipasse met les orifices principaux de ce ou de ces moteurs à des pressions différentes. En d'autres termes, le couple de retenue est alors non seulement celui qui est développé par le ou les moteurs qui sont non bipassés, mais également par celui qui est bipassé et qui est obtenu par la restriction de la liaison de bipasse.

L'efficacité du freinage hydrostatique est donc augmentée du fait de la restriction de la circulation de fluide dans la liaison de bipasse.

Avantageusement, la liaison de bipasse s'étend entre la conduite principale d'échappement et la valve de bipasse.

Dans ces conditions, la valve de bipasse peut être située à un noeud entre l'orifice principal d'alimentation du moteur pouvant être bipassé, une conduite de liaison avec la conduite principale d'alimentation et la liaison de bipasse. Selon sa position, la valve de bipasse peut connecter l'orifice principal de ce moteur à la liaison avec la conduite principale d'alimentation, ou bien à la liaison de bipasse.

Avantageusement, les moyens de restriction comprennent une valve de restriction apte, dans une configuration libre, à permettre une circulation sensiblement libre dans ladite liaison de bipasse lorsque la pression de fluide dans ladite liaison est inférieure à un seuil de pression et, dans une configuration restreinte, à restreindre la circulation dans ladite liaison lorsque ladite pression est supérieure audit seuil de pression. La valve de restriction est avantageusement disposée dans la liaison de bipasse.

Dans sa configuration libre, la valve de restriction permet un fonctionnement normal de la transmission à vitesse augmentée, alors qu'au moins un moteur est bipassé, tandis qu'elle peut être placée dans sa configuration restreinte lorsqu'un freinage hydrostatique est nécessaire à un niveau tel que la pression de fluide dans la liaison de bipasse dépasse le seuil de pression.

Ce seuil de pression peut être défini en fonction du couple de freinage hydrostatique complémentaire nécessaire sur la transmission de l'engin. Avantageusement, ce seuil est au moins égal à la pression de gavage du circuit hydraulique. Il est par exemple de l'ordre de 10 % à 20 % de la pression maximale du circuit (laquelle est en général définie par le tarage de limiteurs de pression reliés aux conduites principales).

Avantageusement, le dispositif comprend un clapet anti-retour, disposé en parallèle de la valve de restriction, pour autoriser une circulation libre dans la liaison de bipasse, dans le sens de circulation non préférentiel. Il est également avantageux que le dispositif comprenne des moyens pour détecter le sens de circulation de l'engin et pour empêcher le passage de la valve de restriction dans ladite configuration restreinte, lorsque le sens de circulation non préférentiel est détecté.

En variante, avantageusement, le dispositif comprend une valve de bipasse de restriction, disposée en parallèle de la valve de restriction et apte à adopter une position de restriction bipassée autorisant une circulation libre dans la liaison de bipasse, et une position de restriction active dans laquelle la circulation de fluide dans la liaison de bipasse passe par la valve de restriction.

Avantageusement, le dispositif comprend une unité électronique de gestion électronique apte, sur la base d'une information relative aux conditions de circulation de l'engin, à permettre ou empêcher le passage de la valve de restriction dans ladite configuration restreinte.

Ces possibilités sont particulièrement utiles lorsque l'on souhaite, dans certaines situations de fonctionnement, entretenir un débit de fluide important dans la liaison de bipasse sans provoquer le passage de la valve de restriction dans sa position dans laquelle elle restreint la circulation dans cette liaison.

C'est en particulier le cas lorsque l'engin circule dans son sens non préférentiel (en marche arrière). Le montage du clapet anti-retour permet alors d'obtenir le débit de fluide souhaité en marche arrière, avec un fonctionnement automatique, commandé hydrauliquement.

Lorsque l'information relative aux conditions de circulation de l'engin se rapporte au sens de circulation de ce dernier et que l'unité de gestion électronique est associée au moyen pour détecter le sens de circulation de l'engin, on permet un débit de fluide dans la liaison de bipasse lorsque l'engin circule en marche arrière.

Toutefois, les conditions de circulation de l'engin dans lesquelles l'unité de gestion électronique peut autoriser ou permettre le passage de la valve de restriction dans sa configuration restreinte peuvent être multiples. On peut par exemple souhaiter permettre un freinage hydrostatique augmenté dans des conditions de charge de l'engin, ou de la répartition de la charge sur les essieux et/ou dans des conditions de circulation particulières, tandis qu'une telle possibilité peut ne pas être pas souhaitable dans d'autres situations.

Selon le nombre et la disposition des organes de déplacement de l'engin, le dispositif peut comprendre au moins un moteur supplémentaire qui, dans la position de vitesse réduite, a ses orifices principaux d'alimentation et d'échappement respectivement reliés aux conduites principales d'alimentation et d'échappement et qui, dans la position de vitesse augmentée, a son orifice principal d'alimentation relié à la conduite principale d'échappement par une liaison de bipasse supplémentaire, tandis que son orifice principal d'échappement est relié à la conduite principale d'échappement, et le dispositif peut comporter des moyens de restriction supplémentaires aptes à être activés pour restreindre la circulation de fluide dans ladite liaison de bipasse supplémentaire.

En variante, dans la position de vitesse augmentée, le moteur supplémentaire peut être bipassé en ayant son orifice principal d'alimentation relié à la conduite principale d'échappement par la liaison de bipasse, qui est commune audit moteur supplémentaire bipassé et audit au moins un moteur bipassé, tandis que les orifices principaux d'échappement desdits moteurs bipassés sont reliés à la conduite principale d'échappement, et les moyens de restriction sont aptes à être activés pour restreindre la circulation de fluide dans la liaison de bipasse commune.

L'invention sera bien comprise et ses avantages apparaîtront mieux à la lecture de la description détaillée qui suit, de modes de réalisation représentés à titre d'exemples non limitatifs.

La description se réfère aux dessins annexés, sur lesquels :
- la figure 1 montre le circuit hydraulique d'un dispositif de transmission hydrostatique selon l'invention, selon un premier mode de réalisation ;
- la figure 2 est un schéma du même type, pour un deuxième mode de réalisation ;
- les figures 3, 4 et 5 montrent des variantes pour la valve de restriction et ses moyens de commande ;
- la figure 6 montre une variante utilisant une valve de restriction commune à deux moteurs ; et
- la figure 7 est une vue analogue à la figure 1, pour une variante de réalisation.

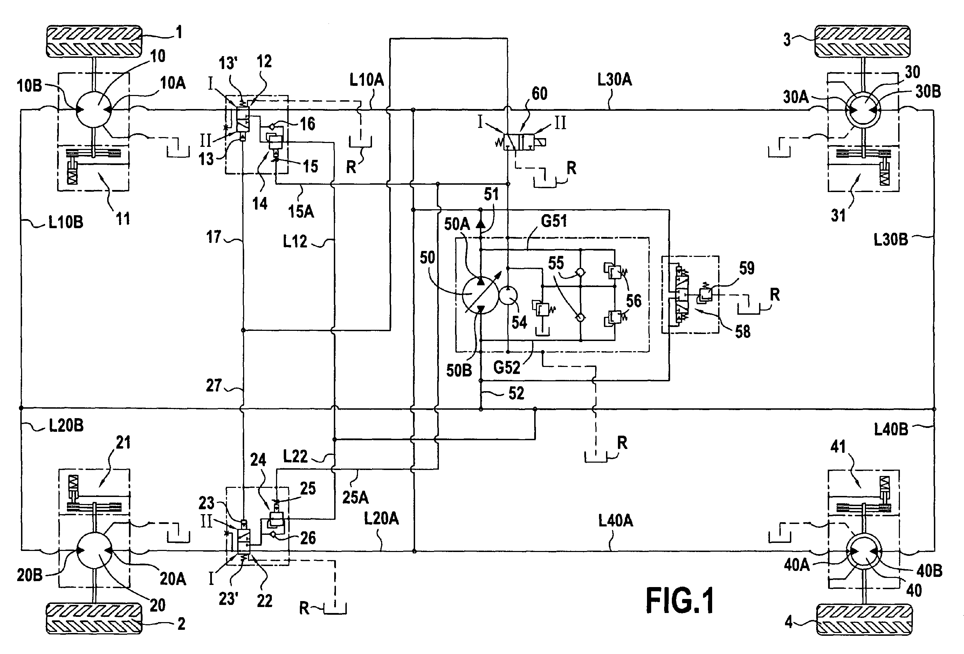

L'engin entraîné par le dispositif dont le circuit hydraulique est représenté sur la figure 1 comprend deux essieux moteurs situés l'un à la suite de l'autre dans sa direction de déplacement. En l'espèce, chacun de ces essieux comprend deux roues, respectivement 1 et 2 pour le premier essieu et 3 et 4 pour le deuxième essieu. Ces roues sont respectivement attelés aux moteurs hydrauliques 10, 20, 30, 40. En l'espèce, les moteurs 10 et 20 des roues 1 et 2 sont des moteurs à une seule cylindrée, tandis que les moteurs 30 et 40 des roues 3 et 4 sont des moteurs à deux cylindrées qui comportent des sélecteurs de cylindrées spécifiques à ces deux moteurs.

Le circuit comporte une pompe principale 50, ayant deux orifices, respectivement 50A et 50B et à débit variable.

Le circuit comprend également deux conduites principales, respectivement une conduite principale 51 reliée à l'orifice 50A et une conduite principale 52 reliée à l'orifice 50B. De manière connue en soi, le dispositif comporte un circuit de gavage comprenant une pompe de gavage 54 qui, par l'intermédiaire de clapets anti-retour 55 peut alimenter en fluide les conduites 51 ou 52 par des conduites G51 et G52, pour éviter la cavitation dans les moteurs. Deux limiteurs de pression 56 protègent le circuit contre les surpressions.

Le circuit comprend une valve d'échange connue en soi comprenant un sélecteur de basse pression 58 relié aux conduites principales et à une conduite d'évacuation vers un réservoir sans surpression R par l'intermédiaire d'un limiteur de pression 59.

Par convention, les conduites principales 51 et 52 sont ci-après respectivement dénommées conduite principale d'alimentation et conduite principale d'échappement, puisqu'elles servent respectivement à l'alimentation et à l'échappement dans le sens préférentiel de circulation.

Les moteurs 10, 20, 30 et 40 ont chacun deux orifices principaux, respectivement 10A, 10B, 20A, 20B, 30A, 30B, 40A et 40B.

Les orifices 10A, 20A, 30A et 40A sont normalement reliés à la conduite principale d'alimentation 51, respectivement par des conduites de liaison L10A, L20A, L30A et L40A. De même, les orifices 10B, 20B, 30B et 40B sont normalement reliés à la conduite principale d'échappement, respectivement par des conduites de liaison L10B, L20B, L30B et L40B. Ainsi, les moteurs sont reliés en parallèle à la pompe.

Cette situation "normale" correspond à un fonctionnement à vitesse réduite, dans laquelle tous les moteurs sont actifs.

Le circuit comprend deux valves de bipasse, respectivement 12 et 22, qui sont respectivement disposées sur les conduites de liaison L10A et L20A.

Plus précisément, chaque valve de bipasse est disposée à un noeud entre la conduite de liaison L10A, respectivement L20A, la conduite principale d'alimentation 51 et une liaison de bipasse, respectivement L12 et L22. Les liaisons de bipasse L12 et L22 sont reliées à la conduite principale d'échappement 52.

Les valves de bipasse 12 et 22 ont chacune une première position I, dans laquelle elles établissent respectivement la continuité de la conduite de liaison L10A et L20A, pour permettre le raccordement des orifices 10A et 20A des moteurs 10 et 20 à la conduite principale d'alimentation 51. Les valves de bipasse ont également une deuxième position II, dans laquelle elles relient respectivement les orifices 10A et 20A aux liaisons de bipasse L12 et L22.

Pour chacune des valves de bipasse, cette liaison est réalisée par l'intermédiaire d'une valve de restriction, respectivement 14 et 24 disposée sur la liaison de bipasse, respectivement L12 et L22.

En l'espèce, chacune de ces valves de restriction est formée par une valve de réduction de pression ou réducteur de pression qui, au repos, permet une circulation sensiblement libre, respectivement dans la liaison de bipasse L12 ou L22 tandis que, lorsque la pression dans le tronçon de la liaison de bipasse qui se trouve entre la valve de restriction 14 ou 24 et la valve de bipasse 12 ou 22 (à l'aval du réducteur de pression) dépasse une valeur seuil, ce réducteur restreint la circulation de fluide dans la liaison de bipasse L12 ou L22.

La valeur seuil précitée peut être la valeur de tarage du ressort de rappel 15 ou 25 du réducteur de pression. Toutefois, dans l'exemple représenté, le réducteur 15 ou 25 a une commande hydraulique reliée au gavage par une conduite de pilotage 15A ou 25A, agissant dans le même sens que le ressort. Ainsi, la valeur seuil pour laquelle le réducteur de pression restreint la circulation présente un différentiel constant avec la pression de gavage, ce différentiel correspondant à la valeur de tarage du ressort.

Les réducteurs 14 et 24 peuvent être de type connu en soi, avec un élément mobile qui, lors de son déplacement, restreint la communication entre les voies du réducteur.

Ainsi, la restriction de la liaison de bipasse L12 ou L22 est progressive, selon la position de l'élément mobile du réducteur de pression 14 ou 24.

De préférence, les ressorts 15 et 25 sont à tarage variable.

On voit que, pour chaque réducteur de pression 14, 24, un clapet anti-retour, respectivement 16 et 26 est disposé en parallèle du réducteur, pour autoriser une circulation libre dans la liaison de bipasse L12, L22, dans le sens non préférentiel de circulation, dans lequel la conduite principale 52 sert à l'alimentation en fluide (marche arrière de l'engin) en position de vitesse augmentée de la valve de bipasse.

Lorsque l'on souhaite réaliser un freinage hydrostatique, alors que l'engin est entraîné dans son sens préférentiel de circulation, on augmente la pression dans la conduite principale d'échappement 52 en diminuant la cylindrée de la pompe 50 et/ou en ralentissant l'entraînement de cette pompe.

Lorsqu'aucun moteur n'est bipassé, c'est-à-dire que les valves de bipasse 12 et 22 sont dans leurs positions I, les moteurs se comportent alors comme des pompes et génèrent un couple de retenue qui freine de manière hydrostatique l'avancement de l'engin.

En revanche, lorsque les moteurs 10 et 20 sont bipassés, c'est-à-dire que les valves de bipasse 12 et 22 sont dans leurs positions II, ces moteurs bipassés ne contribuent pas normalement au freinage hydrostatique puisque la pression est la même aux raccords 10A et 10B d'une part et aux raccords 20A et 20B d'autre part. Les valves de restriction (réducteurs de pression) 14 et 24 permettent alors de restreindre la circulation de fluide dans les liaisons de bipasse L12 et L22. La restriction réalisée par le réducteur 14 génère une différence de pression entre les orifices principaux 10A et 10B du moteur 10, et la restriction réalisée par le réducteur 24 génère une différence de pression entre les orifices principaux 20A et 20B du moteur 20. Ainsi, les moteurs 10 et 20 contribuent au freinage hydrostatique, à la mesure du différentiel de pression créé par les restrictions réalisées.

En revanche, lorsque l'engin est entraîné dans son sens non préférentiel de circulation, la conduite 52 sert à l'alimentation en fluide et est donc mise à la haute pression tandis que la conduite 51, qui sert à l'échappement, est mise à la basse pression. Lorsque les valves de bipasse 12 et 22 sont dans leurs positions I, l'engin circule dans son sens non préférentiel à vitesse réduite (aucun moteur n'étant bipassé) et le freinage hydrostatique fonctionne normalement. A vitesse augmentée, lorsque les valves de bipasse 12 et 22 sont dans leurs positions II, les moteurs 10 et 20 peuvent être bipassés puisque les clapets anti-retour 16 et 26 autorisent une circulation de fluide non restreinte dans les liaisons de bipasse, mettant ainsi les orifices principaux 10A et 20A à la haute pression d'alimentation. Si, dans cette situation, un freinage hydrostatique est requis, alors les moteurs 10 et 20 ne contribuent pas à ce freinage hydrostatique. Ceci n'est généralement pas pénalisant, s'agissant du sens de circulation non préférentiel.

On relève que, dans l'exemple représenté, chacun des moteurs 10, 20, 30 et 40 comporte des moyens de freinage mécanique, respectivement 11, 21, 31 et 41 de type connu en soi. Ainsi, un freinage mécanique peut être mis en oeuvre de manière complémentaire au freinage hydrostatique ou être utilisé en frein de secours.

Les valves de bipasse 12 et 22 sont à commande hydraulique. En effet, pour chacune de ces valves, le dispositif comprend une conduite de pilotage, respectivement 17 et 27, apte à être reliée ou non à une source de pression qui, en l'espèce, est la pompe de gavage 54. Pour cela, le dispositif comprend une électrovalve de sélection 60 à deux positions. Dans sa position I représentée, la valve 60 relie les conduites de pilotage 17 et 27 au réservoir R sans surpression, de sorte que les chambres de commande 13 et 23 des valves de bipasse 12 et 22 ne sont pas alimentées en fluide sous pression, et que ces valves occupent leurs positions I de repos, en étant rappelées dans ces positions par des ressorts de rappel, respectivement 13' et 23'.

Lorsque l'électrovalve 60 est excitée pour passer dans sa position II, elle relie les conduites de pilotage 17 et 27 à la pompe de gavage 54, ce qui permet d'alimenter les chambres hydrauliques de commande 13 et 23 des valves 12 et 22, pour les placer dans leurs positions II.

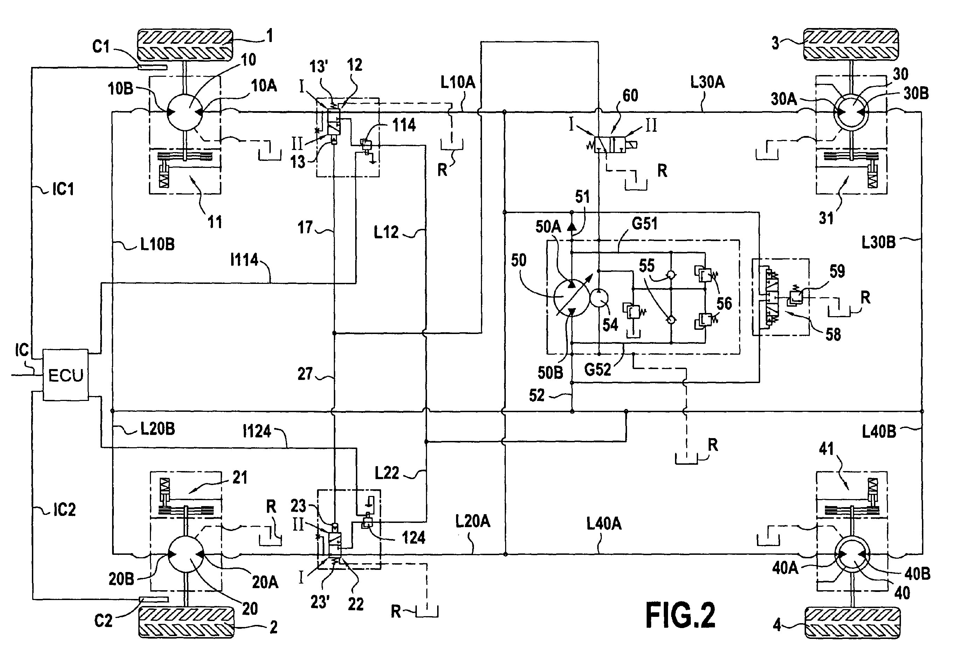

On décrit maintenant la figure 2, en s'attachant aux éléments différents de ceux de la figure 1, les autres étant désignés par des références inchangées. Sur cette figure, les valves de réduction de pression 114 et 124 qui sont respectivement disposées sur les liaisons de bipasse L12 et L22 sont des réducteurs de pression à commande électrique. En l'absence de commande, elles sont dans leur configuration libre et permettent une circulation sensiblement libre dans les liaisons de bipasse respectives L12 et L22. Elles peuvent en revanche être commandées électriquement, respectivement par des lignes de commande I114 et I124 pour restreindre la circulation de fluide dans la liaison de bipasse.

Le dispositif comprend une unité de gestion électronique ECU qui, sur la base d'une information relative aux conditions de circulation de l'engin, peut permettre ou empêcher le passage des valves de restriction 114 et 124 dans leur configuration restreinte. Cette information peut provenir de capteurs C1 et C2, associés aux roues 1 et 2 de l'engin et reliés à l'unité ECU par des lignes respectivement IC1 et IC2. Selon une première variante, ces capteurs servent à détecter le sens de circulation de l'engin. Lorsqu'ils détectent une circulation dans le sens non préférentiel, ils transmettent à l'unité ECU l'information correspondante, afin que l'unité ECU empêche le passage des valves de restriction 114 et 124 dans leurs configurations restreintes lorsque les valves de bipasse 12, 22 sont dans leur position de vitesse augmentée.

Il convient de relever que l'information relative au sens de circulation de l'engin peut être détectée par tout moyen approprié et être transmise à l'unité ECU par une ligne de commande IC. L'information relative au sens de circulation de l'engin peut également être donnée, par exemple, à partir de la position du levier de commande (joy stick) de l'engin ou d'un interrupteur de direction marche avant/marche arrière présent sur son tableau de bord.

De manière générale, l'unité ECU peut recevoir toute information relative aux conditions de circulation ou de charge de l'engin et, en fonction de cette information, permettre ou empêcher le passage des valves 114 et 124 dans leurs configurations restreintes.

L'information relative aux conditions de circulation peut se rapporter au sens de circulation de l'engin, mais également à sa vitesse (la vitesse pouvant être détectée par les capteurs C1 et C2 associés aux roues.

Dans ce cas, la restriction de la liaison de bipasse peut être empêchée même dans le sens de circulation préférentiel.

Comme pour les valves 14 et 24, les restrictions des liaisons de bipasse 12 et 22 réalisées par les valves 114 et 124 sont avantageusement progressives, selon la position des éléments mobiles de ces valves.

Dans les exemples de réalisation qui viennent d'être décrits en référence aux figures 1 et 2, les valves de restriction sont réalisées sous la forme de réducteurs de pression, commandés par la pression en aval (réducteurs 14, 24 de la figure 1) ou électriquement (réducteurs 114, 124 de la figure 2).

Tout autre type de valve de restriction peut être envisagé, et les moyens de commande de cette valve peuvent être choisis parmi les moyens électriques, les moyens mécaniques et les moyens hydrauliques.

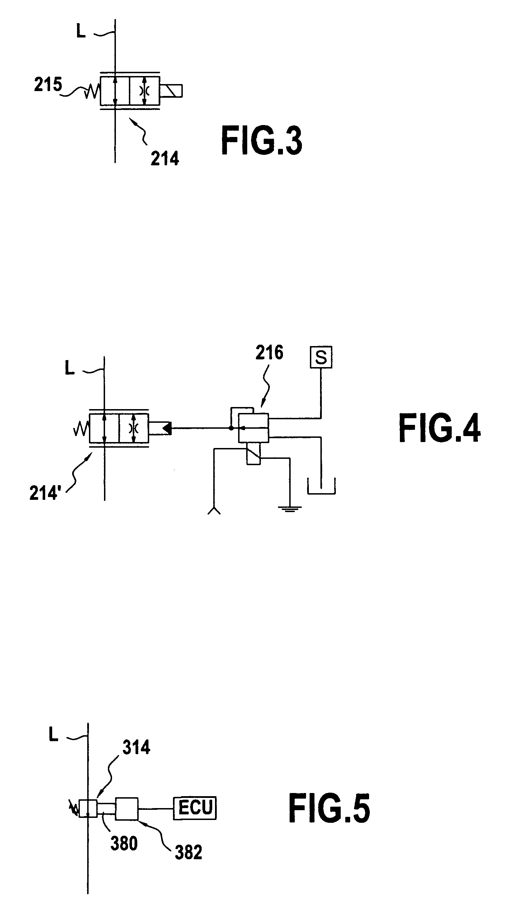

Par exemple, la figure 3 montre l'utilisation, comme valve de restriction, d'une valve à restriction variable 214 à commande électrique proportionnelle directe. La valve 214 est rappelée par un ressort de rappel 215 dans sa configuration de repos, dans laquelle elle permet une circulation libre à travers elle et donc dans la liaison de bipasse L.

La variante représentée sur la figure 4 utilise également une valve à restriction variable 214' qui est à commande électrique proportionnelle et, de manière connue, peut comporter un étage de pilotage hydraulique. Dans ce cas, un réducteur de pression 216 à commande électrique proportionnelle permet d'alimenter la chambre de commande hydraulique de la valve de restriction variable 214' à la pression correspondant au niveau de freinage souhaité à partir d'une source de fluide sous pression S.

La figure 5 montre l'utilisation, comme valve de restriction, d'une valve à restriction variable 314 qui est commandée en fonction de la course d'un organe de commande 380, lui-même commandé par des moyens de commande 382 relié à une unité de gestion électronique ECU comme, par exemple, l'unité ECU de la figure 2. Par exemple, l'activation d'une commande de freinage à un certain niveau de demande en freinage, par exemple par une action sur le joy stick servant à la conduite de l'engin, ou bien sur un organe d'activation du freinage tel qu'une pédale de frein ou analogues, peut conduire l'unité ECU à donner une instruction de commande aux moyens 382 pour déplacer l'organe 380 de manière à plus ou moins restreindre la section de passage de la valve 314, en fonction de la demande en freinage.

L'avantage de ces valves à restriction variable est de permettre de restreindre le fluide dans les deux sens de circulation de la liaison de bipasse L.

Avantageusement, les moyens de commande de la valve de restriction sont aptes à commander le déplacement de cette valve de manière à asservir une variable représentative du fonctionnement de l'engin selon une consigne. C'est en particulier le cas lorsque ces moyens de commande comprennent une unité de gestion électronique ECU. En particulier, la variable représentative du fonctionnement de l'engin peut être la pression ou le débit dans l'une des conduites principales 51 et 52, le couple de sortie d'un ou de plusieurs moteurs, leurs vitesses de sortie, la vitesse de l'engin, la distance parcourue par cet engin, sa position ou sa distance par rapport à une cible, l'accélération ou la décélération de l'engin ou des moteurs ou encore, par exemple, un paramètre de fonctionnement du moteur d'entraînement de la pompe 50 (nombre de tours, vitesse, couple de ce moteur...) ou une combinaison des paramètres précités.

La variable représentative peut être calculée en fonction de la commande des différents éléments concernés, par l'unité ECU, mais le dispositif comprend avantageusement des moyens pour détecter la valeur de cette variable ou des paramètres servant à la calculer.

L'unité ECU peut alors à partir de la valeur détectée et/ou calculée (par exemple par un microprocesseur associé à l'unité ECU ou faisant partie de cette dernière) pour la variable représentative, comparer cette valeur à la consigne mémorisée et émettre un signal de commande de la valve de restriction en réponse à cette comparaison. La consigne est choisie pour permettre l'obtention du couple de freinage hydrostatique additionnel pendant un freinage hydrostatique dans de bonnes conditions, alors que la valve de bipasse est dans sa position II. Les moyens pour mémoriser la consigne peuvent être contenus dans une mémoire d'un microprocesseur.

Avantageusement, le dispositif comprend, pour émettre le signal de commande de la valve de restriction, un système de régulation de type PID.

La consigne utilisée pour l'asservissement est avantageusement une loi de variation pour la variable représentative du fonctionnement du moteur.

Lorsque l'asservissement est réalisé sur la pression dans la conduite d'alimentation 52, il peut permettre d'éviter un emballement du moteur d'entraînement de la pompe 50 en faisant en sorte que cette pression ne dépasse pas une valeur définie pour le freinage hydrostatique.

L'asservissement utilisé pour commander la restriction de la liaison de bipasse peut avantageusement être utilisé pour des fonctions annexes telles que l'aide au virage de l'engin, puisque l'asservissement permet d'augmenter le freinage hydrostatique en freinant alors la roue intérieure au virage, ou encore l'équilibrage du freinage avant/arrière des différentes roues motrices de l'engin, ou encore celui du freinage de type ABS.

Dans la description des figures 1 et 2, on a décrit ensemble les valves de restriction 14 et 24 ou 114 et 124.

Selon l'invention, au moins une valve de restriction est présente, pour permettre de restreindre la circulation de fluide dans la liaison de bipasse d'un moteur ou de plusieurs moteurs d'un même essieu.

Il peut être avantageux de prévoir une valve de bipasse 12 et une valve de restriction du type des valves 14, 114, 214, 214' ou 314 décrites précédemment qui soient communes aux deux moteurs 1 et 2, en étant disposées sur une liaison de bipasse commune.

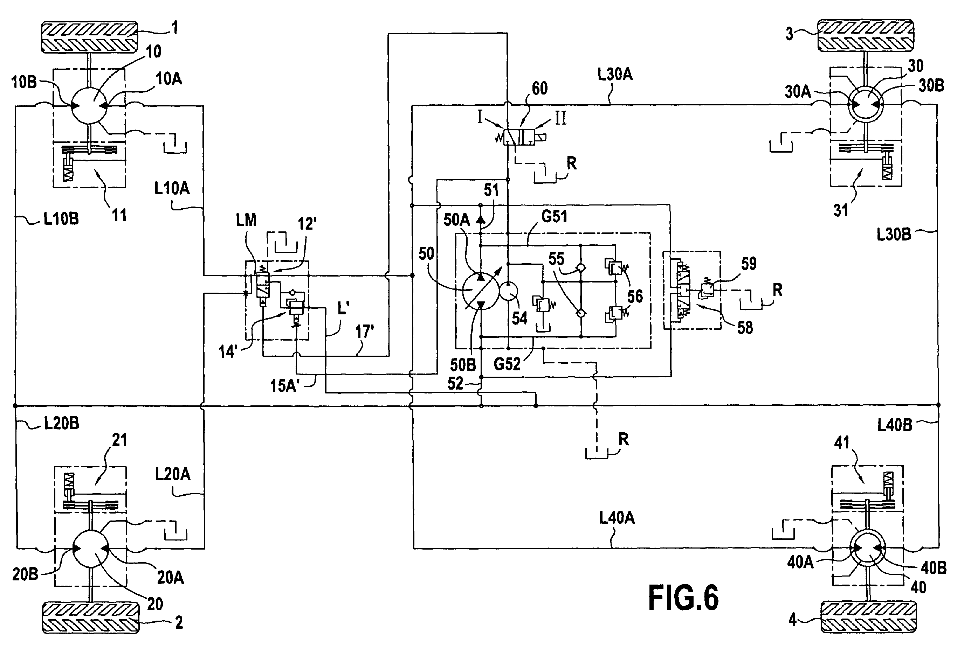

C'est ce que montre la figure 6, pour une valve de restriction 14' analogue à la valve 14. Dans ce cas, la valve de bipasse 12', analogue à la valve 12, est reliée d'une part à une conduite de liaison commune LM entre les orifices 10A du moteur 10 et 20A du moteur 20 et d'autre part à la conduite principale d'alimentation 51, ainsi qu'à une valve de restriction commune 14'. La chambre de commande de la valve 12' est reliée à une conduite de pilotage 17'. La valve de restriction commune 14' est reliée à une liaison de bipasse commune L'. Comme sur la figure 1, un clapet anti-retour peut être disposé en parallèle de cette valve pour autoriser une circulation libre dans la liaison de bipasse L' dans le sens de circulation non préférentiel. Comme sur la figure 1, la valve 14' est relié au gavage par une conduite de pilotage 15A', associée à son ressort de rappel.

Cette solution permet d'économiser des tuyauteries et des composants. Toutefois, il peut être avantageux, comme c'est le cas sur les figures 1 et 2, de prévoir une valve de bipasse et une valve de restriction associées à l'un des moteurs (10) pour les liaisons de bipasse (L12) de ce moteur, et une valve de bipasse supplémentaire (22) et une valve de restriction supplémentaire (24) associées à un moteur supplémentaire (20), la valve de restriction supplémentaire (24) étant disposée sur une liaison de bipasse supplémentaire (L22). Ceci permet en effet de gérer distinctement les débits dans les deux moteurs concernés pour permettre de restreindre ces débits indépendamment.

Avantageusement, la valve de bipasse et la valve de restriction sont disposées dans un même bloc de valve.

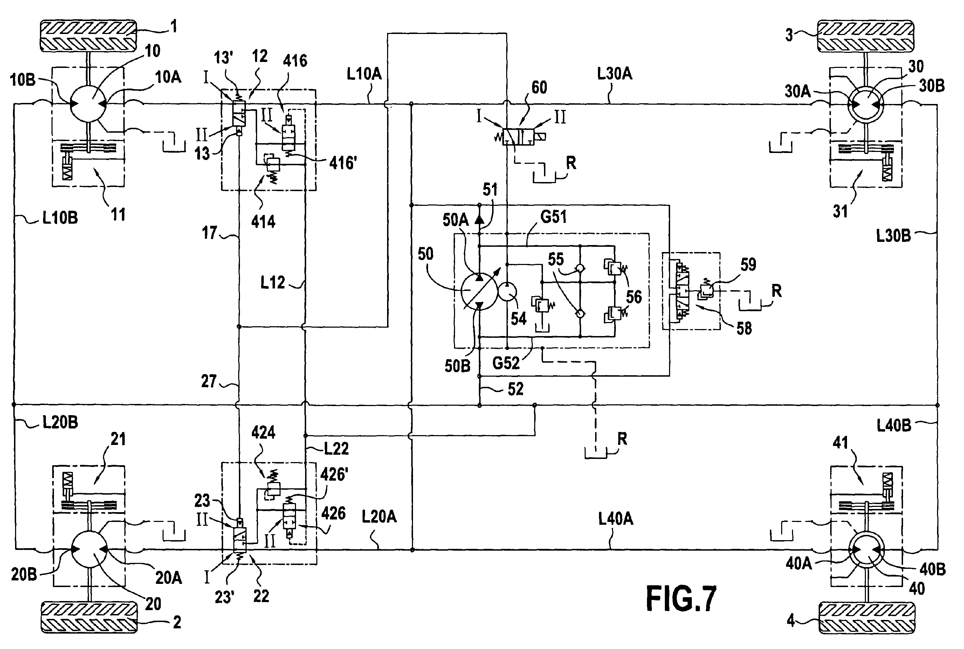

La figure 7 est une vue analogue à la figure 1, de sorte que seuls les éléments modifiés par rapport à la figure 1 sont décrits ci-après.

Sur la figure 7, les valves de restriction sont formées par des réducteurs de pression classiques 414, 424, commandés par la pression à leur amont. Ces réducteurs de pression sont, chacun, bipassés par une valve de bipasse de restriction, respectivement 416 et 426. Ces valves 416, 426 sont commandées hydrauliquement par la pression dans la liaison de bipasse, respectivement L12 et L22, à l'encontre de l'effort de rappel d'un ressort 416', 426'.

A l'état libre, les valves 416 et 426 occupent leurs positions I, dans lesquelles elles sont représentées et qui autorisent une circulation libre dans la liaison de bipasse (à travers les valves de bipasse de restriction), dans les deux sens de circulation du fluide. Lorsque la pression dans la liaison de bipasse L12, L22 atteint une valeur suffisante, les valves 416 et 426 passent dans leurs positions II. Ces positions II sont des positions de restriction active dans lesquelles la circulation de fluide dans les liaisons de bipasse ne passe pas par les valves de bipasse de restriction, mais passe au contraire par les réducteurs de pression 414, 424 qui restreignent donc la circulation dans les liaisons de bipasse.

Ainsi, lorsque les moteurs 10, 20 sont bipassés et que l'engin circule sans être freiné, le fluide peut circuler librement dans les liaisons de bipasse, sans passer par les réducteurs de pression 414, 424, évitant ainsi tout risque de cavitation dans les conduites d'alimentation et d'échappement des moteurs bipassés.

Lors du freinage, la pression de fluide augmente dans ces conduites, ce qui provoque le passage des valves 416, 426 dans leurs positions II de restriction active et permet aux réducteurs de pression 414 et 424 de jouer leur rôle pour augmenter le couple de freinage.

Il convient de relever que les valves de bipasse de restriction 416 et 426 peuvent être des valves à deux positions, ou bien des valves progressives. Dans ce dernier cas, dès que ces valves quittent leurs positions I pour aller vers leurs postions II, elles créent des pertes de charge entre leurs deux bornes ce qui, déjà, favorise l'augmentation du couple de freinage.

Les moteurs aptes à être bipassés peuvent être à plusieurs cylindrées ou à cylindrée variable pour disposer de gammes supplémentaires de vitesse, par exemple pour disposer de 4 roues motrices en travail sur terrain difficile sur deux gammes de vitesse. Sur route, à grande vitesse, une cylindrée réduite sur le moteur bipassé permet de diminuer le débit circulant des liaisons de bipasse et dans les valves de restriction, ce qui permet d'utiliser des valves plus économiques. Cela présente aussi l'avantage d'obtenir un freinage complémentaire modéré sur route avec la possibilité d'obtenir un freinage plus important en passant le moteur en grande cylindrée en cas de besoin.

## Revendications

1. Dispositif de transmission hydrostatique d'un engin mobile ayant au moins deux organes de déplacement (1, 2, 3, 4) disposés l'un à la suite de l'autre dans le sens de déplacement dudit engin, le dispositif comprenant au moins deux moteurs hydrauliques (10, 20, 30, 40), aptes à entraîner respectivement lesdits organes de déplacement et ayant chacun deux orifices principaux (10A, 10B ; 20A, 20B ; 30A, 30B ; 40A, 40B) qui servent respectivement à l'alimentation et à l'échappement dans un sens préférentiel de circulation de l'engin, une pompe hydraulique principale (50) reliée à deux conduites principales (51, 52) qui servent respectivement à l'alimentation et à l'échappement dans le sens préférentiel, et une valve de bipasse (12, 22) apte à adopter une position (I) de vitesse réduite dans laquelle les orifices principaux d'alimentation (10A, 20A, 30A, 40A) des moteurs sont reliés à la conduite principale d'alimentation (51), tandis que les orifices principaux d'échappement (10B, 20B, 30B, 40B) sont reliés à la conduite principale d'échappement (52) et une position (II) de vitesse augmentée dans laquelle au moins un moteur (10, 20) est bipassé, l'orifice principal d'alimentation (10A, 20A) dudit moteur étant relié à la conduite principale d'échappement (52) par une liaison de bipasse (L12, L22, L, L'), tandis que les autres orifices principaux conservent leurs liaisons respectives,
**caractérisé en ce qu'**il comporte des moyens de restriction (14, 24 ; 114, 124 ; 214 ; 314 ; 414, 424) aptes à être activés pour restreindre la circulation de fluide dans ladite liaison de bipasse (L12, L22, L, L') alors que la valve de bipasse est dans sa position (II) de vitesse augmentée.

2. Dispositif selon la revendication 1, **caractérisé en ce que** la liaison de bipasse (L12, L22, L, L') s'étend entre la conduite principale d'échappement (52) et la valve de bipasse (12, 22).

3. Dispositif selon la revendication 1 ou 2, **caractérisé en ce que** les moyens de restriction comprennent une valve de restriction (14, 24 ; 114, 124 ; 214 ; 314 ; 414, 424) apte, dans une configuration libre, à permettre une circulation sensiblement libre dans ladite liaison de bipasse (L12, L22, L, L') lorsque la pression de fluide dans ladite liaison est inférieure à un seuil de pression et, dans une configuration restreinte, à restreindre la circulation dans ladite liaison lorsque ladite pression est supérieure audit seuil de pression.

4. Dispositif selon la revendication 3, **caractérisé en ce que** la valve de restriction (14, 24 ; 114, 124 ; 214 ; 314 ; 414 424) est disposée dans la liaison de bipasse (L12, L22, L, L').

5. Dispositif selon la revendication 3 ou 4, **caractérisé en ce qu'**il comprend un clapet anti-retour (16, 26, 216), disposé en parallèle de la valve de restriction (14, 24, 214), pour autoriser une circulation libre dans la liaison de bipasse (L12, L22, L, L'), dans le sens de circulation non préférentiel.

6. Dispositif selon la revendication 3 ou 4, **caractérisé en ce qu'**il comprend une valve de bipasse de restriction (416, 426), disposée en parallèle de la valve de restriction (414, 424) et apte à adopter une position (I) de restriction bipassée autorisant une circulation libre dans la liaison de bipasse (L12, L22), et une position (II) de restriction active dans laquelle la circulation de fluide dans la liaison de bipasse passe par la valve de restriction.

7. Dispositif selon la revendication 3 ou 4, **caractérisé en ce qu'**il comprend des moyens (C1, C2, ECU) pour détecter le sens de circulation de l'engin et pour empêcher le passage de la valve de restriction (114, 124 ; 314) dans ladite configuration restreinte, lorsque le sens de circulation non préférentiel est détecté.

8. Dispositif selon l'une quelconque des revendications 1 à 7, **caractérisé en ce qu'**il comprend une unité de gestion électronique (ECU) apte, sur la base d'une information relative aux conditions de circulation de l'engin, à permettre ou empêcher le passage de la valve de restriction (114, 124 ; 314) dans ladite configuration restreinte.

9. Dispositif selon l'une quelconque des revendications 3 à 8, **caractérisé en ce que** la valve de restriction (14, 24 ; 114, 124 ; 414, 424) est une valve de réduction de pression.

10. Dispositif selon l'une quelconque des revendications 3 à 8, **caractérisé en ce que** la valve de restriction (214, 314) est une valve de restriction variable à commande proportionnelle.

11. Dispositif selon l'une quelconque des revendications 1 à 10, **caractérisé en ce que** la valve de bipasse (12, 22) est à commande hydraulique.

12. Dispositif selon la revendication 11, **caractérisé en ce que**, pour commander la valve de bipasse (12, 22), il comprend une conduite de pilotage (17, 27), apte à être reliée ou non à une source de pression (54).

13. Dispositif selon l'une quelconque des revendications 1 à 12, **caractérisé en ce qu'**il comprend au moins un moteur supplémentaire (20) qui, dans la position de vitesse réduite, a ses orifices principaux d'alimentation et d'échappement (20A, 20B) respectivement reliés aux conduites principales d'alimentation et d'échappement (51, 52) et qui, dans la position de vitesse augmentée, a son orifice principal d'alimentation relié à la conduite principale d'échappement (52) par une liaison de bipasse supplémentaire (L22), tandis que son orifice principal d'échappement reste relié à la conduite principale d'échappement, et **en ce qu'**il comporte des moyens de restriction (24 ; 124 ; 424) supplémentaires aptes à être activés pour restreindre la circulation de fluide dans ladite liaison de bipasse supplémentaire (L22).

14. Dispositif selon l'une quelconque des revendications 1 à 12, **caractérisé en ce qu'**il comprend au moins un moteur supplémentaire (20) qui, dans la position de vitesse réduite, a ses orifices principaux d'alimentation et d'échappement (20A, 20B) respectivement reliés aux conduites principales d'alimentation et d'échappement (51, 52) et qui, dans la position de vitesse augmentée, est bipassé en ayant son orifice principal d'alimentation relié à la conduite principale d'échappement (52) par la liaison de bipasse (L'), qui est commune audit moteur supplémentaire bipassé et audit au moins un moteur bipassé, tandis que les orifices principaux d'échappement desdits moteurs bipassés sont reliés à la conduite principale d'échappement, et **en ce que** les moyens de restriction (14') sont aptes à être activés pour restreindre la circulation de fluide dans ladite liaison de bipasse commune (L').

15. Dispositif selon l'une quelconque des revendications 3 à 14, **caractérisé en ce qu'**il comprend des moyens de commande de la valve de restriction (314) aptes à commander ladite valve en fonction de la course d'un organe de commande (380).

16. Dispositif selon l'une quelconque des revendications 3 à 14, **caractérisé en ce qu'**il comprend des moyens de commande (ECU) de la valve de restriction (114, 214, 314) aptes à commander le déplacement de ladite valve de manière à asservir une variable représentative du fonctionnement de l'engin selon une consigne.

17. Dispositif selon la revendication 16, **caractérisé en ce que** les moyens de commande de la valve de restriction (114, 214, 314) comprennent des moyens (ECU) pour mémoriser la consigne et une unité de gestion électronique (ECU) apte à recevoir la valeur détectée pour la variable représentative, à comparer cette valeur à la consigne mémorisée et à émettre un signal de commande en réponse à cette comparaison.

18. Dispositif selon l'une quelconque des revendications 3 à 17, **caractérisé en ce qu'**il comprend des moyens de commande de la valve de restriction (14, 24, 114, 124, 214, 314), choisis parmi des moyens électriques (ECU), des moyens mécaniques (380) et des moyens hydrauliques (214 ; 270) comprenant avantageusement un réducteur de pression ou un régulateur de pression (270).

19. Dispositif selon l'une quelconque des revendications 3 à 18, **caractérisé en ce que** la restriction de la liaison de bipasse (L12, L22, L) est progressive, selon la position de la valve de restriction (14, 24 ; 114, 124 ; 214 ; 314 ; 414, 424).

## Claims

1. Hydrostatic transmission apparatus for a vehicle having at least two drive members (1, 2, 3, 4) disposed one after the other in the direction of travel of said vehicle, the apparatus comprising at least two hydraulic motors (10, 20, 30, 40) suitable for driving respective ones of said drive members, each hydraulic motor having two main orifices (10A, 10B; 20A, 20B; 30A, 30B; 40A, 40B) serving respectively as feed and as discharge in a preferred direction of travel of the vehicle, a main hydraulic pump (50) connected to two main ducts (51, 52) that serve respectively as feed and as discharge in the preferred direction, and a bypass valve (12, 22) suitable for taking up a reduced-speed position (I) in which the feed main orifices (10A, 20A, 30A, 40A) of the motors are connected to the feed main duct (51), while the discharge main orifices (10B, 20B, 30B, 40B) are connected to the discharge main duct (52), and an increased-speed position (II) in which at least one motor (10, 20) is bypassed, the feed main orifice (10A, 20A) of said motor being connected to the discharge main duct (52) via a bypass link (L12, L22, L, L'), while the other main orifices continue to have their respective links;
said hydrostatic transmission apparatus being **characterized in that** it further comprises constriction means (14, 24; 114, 124; 214; 314; 414, 424) suitable for being activated to restrict the flow of fluid through said bypass link (L12, L22, L, L').

2. Apparatus according to claim 1, **characterized in that** the bypass link (L12, L22, L, L') extends between the discharge main duct (52) and the bypass valve (12, 22).

3. Apparatus according to claim 1 or 2, **characterized in that** the constriction means comprise a constriction valve (14, 24; 114, 124; 214; 314; 414, 424) suitable, in a free configuration, for enabling fluid to flow substantially freely in said bypass link (L12, L22, L, L') when the fluid pressure in said link is less than a pressure threshold, and, in a constricted configuration, for restricting the flow of fluid in said link when said pressure is greater than said pressure threshold.

4. Apparatus according to claim 3, **characterized in that** the constriction valve (14, 24; 114, 124; 214; 314; 414, 424) is disposed in the bypass link (L12, L22, L, L').

5. Apparatus according to claim 3 or claim 4, **characterized in that** it further comprises a check valve (16, 26, 216) that is disposed in parallel with the constriction valve (14, 24, 214) so as to allow free flow in the bypass link (L12, L22, L, L'), in the non-preferred direction of travel.

6. Apparatus according to claim 3 or claim 4, **characterized in that** it further comprises a constriction bypass valve (416, 426) disposed in parallel with the constriction valve (414, 424) and suitable for taking up a constriction bypassed position (I) allowing free flow in the bypass link (L12, L22), and a constriction active position (II) in which the flow of fluid in the bypass link goes via the constriction valve.

7. Apparatus according to claim 3 or claim 4, **characterized in that** it further comprises means (C1, C2, ECU) for detecting the direction of travel of the vehicle and for preventing the constriction valve (114, 124; 314) from going into said constricted configuration when the non-preferred direction of travel is detected.

8. Apparatus according to any one of claims 1 to 7, **characterized in that** it further comprises an electronic control unit (ECU) that is suitable for acting on the basis of information relating to the conditions of travel of the vehicle either to allow the constriction valve (114, 124; 314) to go into said constricted configuration or to prevent it from going into said constricted configuration.

9. Apparatus according to any one of claims 3 to 8, **characterized in that** the constriction valve (14, 24; 114, 124; 414, 424) is a pressure-reducing valve.

10. Apparatus according to any one of claims 3 to 8, **characterized in that** the constriction valve (214, 314) is a variable constriction valve that is controlled proportionally.

11. Apparatus according to any one of claims 1 to 10, **characterized in that** the bypass valve (12, 22) is controlled hydraulically.

12. Apparatus according to claim 11, **characterized in that**, in order to control the bypass valve (12, 22), said apparatus further comprises a pilot duct (17, 27) suitable for being connected or not connected to a pressure source (54).

13. Apparatus according to any one of claims 1 to 12, **characterized in that** it further comprises at least one additional motor (20) that, in the reduced-speed position, has its feed and discharge main orifices (20A, 20B) connected respectively to the feed and discharge main ducts (51, 52) and that, in the increased-speed position, has its feed main orifice connected to the discharge main duct (52) via an additional bypass link (L22), whereas its discharge main orifice remains connected to the discharge main duct, and **in that** it further comprises additional constriction means (24; 124; 424) suitable for being activated to restrict the flow of fluid in said additional bypass link (L22).

14. Apparatus according to any one of claims 1 to 12, **characterized in that** it further comprises at least one additional motor (20) that, in the reduced-speed position, has its feed and discharge main orifices (20A, 20B) connected respectively to the feed and discharge main ducts (51, 52) and that, in the increased-speed position, is bypassed by having its feed main orifice connected to the discharge main duct (52) via the bypass link (L'), which link is common to said bypassed additional motor and to said at least one bypassed motor, whereas the discharge main orifices of said bypassed motors are connected to the discharge main duct, and **in that** the constriction means (14') are suitable for being activated to restrict the flow of fluid in said common bypass link (L').

15. Apparatus according to any one of claims 3 to 14, **characterized in that** it further comprises control means for controlling the constriction valve (314), which control means are suitable for controlling said valve as a function of the stroke of a control member (380).

16. Apparatus according to any one of claims 3 to 14, **characterized in that** it further comprises control means (ECU) for controlling the constriction valve (114, 214, 314), which control means are suitable for causing said valve to move in such a manner as to servo-control a variable representative of operation of the vehicle to a setpoint.

17. Apparatus according to claim 16, **characterized in that** the control means for controlling the constriction valve (114, 214, 314) comprise means (ECU) for storing the setpoint and an electronic control unit (ECU) suitable for receiving the detected value for the representative value, for comparing said value with the stored setpoint, and for responding to said comparison by issuing a control signal.

18. Apparatus according to any one of claims 3 to 17, **characterized in that** it further comprises control means for controlling the constriction valve (14, 24, 114, 124, 214, 314), which means are chosen from among electrical means (ECU), mechanical means (380), and hydraulic means (214; 270) advantageously including a pressure reducer or a pressure regulator (270).

19. Apparatus according to any one of claims 3 to 18, **characterized in that** the constriction of the bypass link (L12, L22, L) is progressive, depending on the position of the constriction valve (14, 24; 114, 124; 214; 314; 414, 424).

## Patentansprüche

1. Hydrostatische Antriebsvorrichtung einer beweglichen Maschine mit wenigstens zwei Bewegungsorganen (1, 2, 3, 4), die in der Bewegungsrichtung der Maschine hintereinander angeordnet sind, wobei die Vorrichtung wenigstens zwei Hydraulikmotoren (10, 20, 30, 40), die geeignet sind, jeweils die Bewegungsorgane anzutreiben, und die jeweils zwei Hauptöffnungen (10A, 10B; 20A, 20B; 30A, 30B; 40A, 40B) aufweisen, welche zum Zuführen bzw. zum Auslassen in einer bevorzugten Fahrtrichtung der Maschine dienen, eine Haupthydraulikpumpe (50), die mit zwei Hauptleitungen (51, 52) verbunden ist, welche zum Zuführen bzw. zum Auslassen in der bevorzugten Richtung dienen, sowie ein Bypassventil (12, 22) umfaßt, das geeignet ist, eine Position (I) verminderter Geschwindigkeit einzunehmen, in der die Hauptzuführöffnungen (10A, 20A, 30A, 40A) der Motoren mit der Hauptzuführleitung (51) verbunden sind, während die Hauptauslaßöffnungen (10B, 20B, 30B, 40B) mit der Hauptauslaßleitung (52) verbunden sind, sowie eine Position (II) erhöhter Geschwindigkeit, in der wenigstens ein Motor (10, 20) überbrückt ist, wobei die Hauptzuführöffnung (10A, 20A) des Motors mit der Hauptauslaßleitung (52) über eine Bypassverbindung (L12, L22, L, L') verbunden ist, während die anderen Hauptöffnungen ihre jeweiligen Verbindungen beibehalten,
**dadurch gekennzeichnet, daß** sie Drosselmittel (14, 24; 114, 124; 214; 314; 414, 424) umfaßt, die geeignet sind, aktiviert zu werden, um die Fluidzirkulation in der Bypassverbindung (L12, L22, L, L') zu drosseln, während das Bypassventil in seiner Position (II) erhöhter Geschwindigkeit ist.

2. Vorrichtung nach Anspruch 1, **dadurch gekennzeichnet, daß** die Bypassverbindung (L12, L22, L, L') zwischen der Hauptauslaßleitung (52) und dem Bypassventil (12, 22) verläuft.

3. Vorrichtung nach Anspruch 1 oder 2, **dadurch gekennzeichnet, daß** die Drosselmittel ein Drosselventil (14, 24; 114, 124; 214; 314; 414, 424) umfassen, das in einer freien Ausführung geeignet ist, ein im wesentlichen freies Zirkulieren in der Bypassverbindung (L12, L22, L, L') zu ermöglichen, wenn der Fluiddruck in der Verbindung eine Druckschwelle unterschreitet, und in einer gedrosselten Ausführung geeignet ist, die Zirkulation in der Verbindung zu drosseln, wenn der Druck die Druckschwelle überschreitet.

4. Vorrichtung nach Anspruch 3, **dadurch gekennzeichnet, daß** das Drosselventil (14, 24; 114, 124; 214; 314; 414, 424) in der Bypassverbindung (L12, L22, L, L') angeordnet ist.

5. Vorrichtung nach Anspruch 3 oder 4, **dadurch gekennzeichnet, daß** sie ein Rückschlagventil (16, 26, 216) umfaßt, das mit dem Drosselventil (14, 24, 214) parallelgeschaltet ist, um ein freies Zirkulieren in der Bypassverbindung (L12, L22, L, L') in der nicht bevorzugten Fahrtrichtung zuzulassen.

6. Vorrichtung nach Anspruch 3 oder 4, **dadurch gekennzeichnet, daß** sie ein Bypass-Drosselventil (416, 426) umfaßt, das mit dem Drosselventil (414, 424) parallelgeschaltet und geeignet ist, eine Position (I) überbrückter Drosselung einzunehmen, die ein freies Zirkulieren in der Bypassverbindung (L12, L22) zuläßt, sowie eine Position (II) aktiver Drosselung, in der die Fluidzirkulation in der Bypassverbindung über das Drosselventil läuft.

7. Vorrichtung nach Anspruch 3 oder 4, **dadurch gekennzeichnet, daß** sie Mittel (C1, C2, ECU) umfaßt, um die Fahrtrichtung der Maschine zu erfassen und um den Übergang des Drosselventils (114, 124; 314) in die gedrosselte Ausführung zu verhindern, wenn die nicht bevorzugte Fahrtrichtung erfaßt wird.

8. Vorrichtung nach einem der Ansprüche 1 bis 7, **dadurch gekennzeichnet, daß** sie eine elektronische Steuereinheit (ECU) umfaßt, die geeignet ist, auf der Grundlage einer Information über die Fahrbedingungen der Maschine den Übergang des Drosselventils (114, 214; 314) in die gedrosselte Ausführung zu ermöglichen oder zu verhindern.

9. Vorrichtung nach einem der Ansprüche 3 bis 8, **dadurch gekennzeichnet, daß** das Drosselventil (14, 24; 114, 124; 414, 424) ein Druckminderungsventil ist.

10. Vorrichtung nach einem der Ansprüche 3 bis 8, **dadurch gekennzeichnet, daß** das Drosselventil (214, 314) ein proportional gesteuertes Ventil mit variabler Drosselung ist.

11. Vorrichtung nach einem der Ansprüche 1 bis 10, **dadurch gekennzeichnet, daß** das Bypassventil (12, 22) hydraulisch gesteuert ist.

12. Vorrichtung nach Anspruch 11, **dadurch gekennzeichnet, daß** sie zur Steuerung des Bypassventils (12, 22) eine Steuerleitung (17, 27) umfaßt, die geeignet ist, mit einer Druckquelle (54) verbunden zu werden oder auch nicht.

13. Vorrichtung nach einem der Ansprüche 1 bis 12, **dadurch gekennzeichnet, daß** sie wenigstens einen zusätzlichen Motor (20) umfaßt, dessen Hauptzuführ- und Hauptauslaßöffnung (20A, 20B) in der Position verminderter Geschwindigkeit mit der Hauptzuführ- bzw. der Hauptauslaßleitung (51, 52) verbunden sind und dessen Hauptzuführöffnung in der Position erhöhter Geschwindigkeit über eine zusätzliche Bypassverbindung (L22) mit der Hauptauslaßleitung (52) verbunden ist, während seine Hauptauslaßöffnung mit der Hauptauslaßleitung verbunden bleibt, und daß sie zusätzliche Drosselmittel (24; 124; 424) umfaßt, die geeignet sind, aktiviert zu werden, um die Fluidzirkulation in der zusätzlichen Bypassverbindung (L22) zu drosseln.

14. Vorrichtung nach einem der Ansprüche 1 bis 12, **dadurch gekennzeichnet, daß** sie wenigstens einen zusätzlichen Motor (20) umfaßt, dessen Hauptzuführ- und Hauptauslaßöffnung (20A, 20B) in der Position verminderter Geschwindigkeit mit der Hauptzuführ- bzw. der Hauptauslaßleitung (51, 52) verbunden sind, und der in der Position erhöhter Geschwindigkeit dadurch überbrückt ist, daß seine Hauptzuführöffnung über die Bypassverbindung (L'), welche dem zusätzlichen überbrückten Motor und dem wenigstens einen überbrückten Motor gemein ist, mit der Hauptauslaßleitung (52) verbunden ist, während die Hauptauslaßöffnungen der überbrückten Motoren mit der Hauptauslaßleitung verbunden sind, und daß die Drosselmittel (14') geeignet sind, aktiviert zu werden, um die Fluidzirkulation in der gemeinsamen Bypassverbindung (L') zu drosseln.

15. Vorrichtung nach einem der Ansprüche 3 bis 14, **dadurch gekennzeichnet, daß** sie Mittel zum Steuern des Drosselventils (314) umfaßt, die geeignet sind, das Ventil in Abhängigkeit von dem Weg eines Steuerorgans (380) zu steuern.

16. Vorrichtung nach einem der Ansprüche 3 bis 14, **dadurch gekennzeichnet, daß** sie Mittel zum Steuern (ECU) des Drosselventils (114, 214, 314) umfaßt, die geeignet sind, die Bewegung des Ventils zu steuern, um eine für den Betrieb der Maschine repräsentative Variable nach einem Sollwert zu richten.

17. Vorrichtung nach Anspruch 16, **dadurch gekennzeichnet, daß** die Mittel zum Steuern des Drosselventils (114, 214, 314) Mittel (ECU) zur Speicherung des Sollwerts sowie eine elektronische Steuereinheit (ECU) umfassen, die geeignet ist, den für die repräsentative Variable erfaßten Wert aufzunehmen, diesen Wert mit dem gespeicherten Sollwert zu vergleichen und als Reaktion auf diesen Vergleich ein Steuersignal auszusenden.

18. Vorrichtung nach einem der Ansprüche 3 bis 17, **dadurch gekennzeichnet, daß** sie Mittel zum Steuern des Drosselventils (14, 24, 114, 124, 214, 314) umfaßt, die aus elektrischen Mitteln (ECU), mechanischen Mitteln (380) und hydraulischen Mitteln (214; 270), die vorteilhafterweise einen Druckminderer oder einen Druckregulierer (270) umfassen, ausgewählt sind.

19. Vorrichtung nach einem der Ansprüche 3 bis 18, **dadurch gekennzeichnet, daß** die Drosselung der Bypassverbindung (L12, L22, L) entsprechend der Position des Drosselventils (14, 24; 114, 124; 214; 314; 414, 424) progressiv ist.
